# EUROPÄISCHE PATENTSCHRIFT

(11) **EP 2 923 436 B1**
(45) Veröffentlichungstag und Bekanntmachung des Hinweises auf die Patenterteilung: **08.03.2017**
(21) Anmeldenummer: 13766108.8
(22) Anmeldetag: 24.09.2013
(51) Int. Cl.: H02K 5/173, H02K 5/10, H02K 1/14, H02K 5/02, H02K 5/15, H02K 5/167, H02K 5/18, H02K 15/14, H02K 1/18, H02K 7/08

(54) **STATOR MIT EINER UMSPRITZUNG UND ELEKTRISCHE MASCHINE MIT DEM STATOR**
STATOR HAVING AN ENCAPSULATION, AND ELECTRICAL MACHINE COMPRISING THE STATOR
STATOR POURVU D'UN ENROBAGE ET MACHINE ÉLECTRIQUE ÉQUIPÉE DU STATOR

(30) Priorität: 26.11.2012 DE 102012221596
(43) Veröffentlichungstag der Anmeldung: 30.09.2015
(73) Patentinhaber: Robert Bosch GmbH, 70442 Stuttgart (DE)
(72) Erfinder: KLEMENTIS, Otto, H-9012 Gyor (HU); DOCZY, Pal, H-1031 Budapest (HU); SIMON, Ferenc, H-9172 Györzamoly (HU)
(86) Internationale Anmeldenummer: PCT/EP2013/069849
(87) Internationale Veröffentlichungsnummer: WO 2014/079611

(56) Entgegenhaltungen:
- EP-A2- 0 339 367
- EP-A2- 1 422 809
- DE-B3-102005 022 793
- US-A- 5 945 759
- US-A1- 2004 245 872

## Beschreibung

### Stand der Technik

Die vorliegende Erfindung betrifft einen Stator für eine elektrische Maschine, der eine Umspritzung aufweist und sich konzentrisch um eine Achse erstreckt, wobei die Umspritzung an einer achsabgewandten Seite des Stators zumindest teilweise eine Außenfläche des Stators bildet. Die vorliegende Erfindung betrifft weiterhin eine elektrische Maschine mit einem solchen Stator.

Elektrische Maschinen weisen rotierende Komponenten auf, die in statischen Komponenten gelagert sind, beispielsweise mit Hilfe von Kugel- oder Gleitlagern. Bei ihrer Rotation entstehen Geräusche und Vibrationen, die umso größer sind, je größer die Abweichung der rotierenden Komponenten von der Konzentrizität zur Rotationsachse ist. Bei Gleichstrommaschinen sind die Lager häufig in einem die elektrische Maschine umgebenden Gehäuse oder an einem Gehäusedeckel befestigt. Für elektrische Maschinen, deren Stator in axialer Richtung länger als ihr Rotor ist, ist es weiterhin bekannt, die Lager am Stator zu befestigen, wodurch die Toleranzkette im Vergleich zu einer Lagerung im Gehäuse oder am Gehäusedeckel verringert ist, so dass die Konzentrizität verbessert ist.

Bei segmentierten Statoren ist eine solche Lagerung jedoch nicht möglich. Für solche Statoren ist es beispielsweise bekannt, die Statorsegmente im Gehäuse, und die Lager im Gehäuse oder am Gehäusedeckel zu verkleben. Weiterhin sind im Stator eingespritzte Festlager bekannt. Die Druckschrift US 2004/245872 A1 offenbart einen Innenläufer- Elektromotor mit einem Statorkörper, der aus Statorschalensegmenten gebildet ist. Die Statorschalensegmente sind als Spritzgussteile ausgebildet, in denen jeweils eine Aufnahme für die Wälzlager integriert ist.

### Offenbarung der Erfindung

Aufgabe der vorliegenden Erfindung ist es, die Konzentrizität der rotierenden Komponenten einer elektrischen Maschine weiter zu verbessern, so dass die Geräusch- und Vibrationsentwicklung im Betrieb der elektrischen Maschine verringert ist.

Die Aufgabe wird gelöst mit einem Stator für eine elektrische Maschine, der sich konzentrisch um eine Achse erstreckt und eine Umspritzung aufweist, die an einer achsabgewandten Seite des Stators zumindest teilweise eine Außenfläche des Stators bildet, und die an einer achszugewandten Seite des Stators einen Lagersitz für ein Loslager aufweist. Dadurch ist das Loslager am Stator anordbar. Gegenüber einem an einem Gehäuse oder Gehäusedeckel angeordneten Loslager ist die Toleranzkette in Bezug auf das Loslager bei diesem Stator verringert. Die Konzentrizität ist entsprechend verbessert, so dass eine elektrische Maschine mit diesem Stator eine geringere Geräusch- und Vibrationsentwicklung im Betrieb aufweist.

Der Lagersitz umfasst bevorzugt eine erste Passfläche, die an der achszugewandten Seite des Stators vorgesehen ist. In einer ersten bevorzugten Ausführungsform erstreckt sich die erste Passfläche konzentrisch um die Achse.

Es ist jedoch in Abhängigkeit vom Herstellungsverfahren und Material der Umspritzung in einer zweiten Ausführungsform ebenso bevorzugt, dass der Lagersitz an seiner achszugewandten Seite mehrere in Umfangsrichtung insbesondere gleichmäßig verteilte erste Passflächen aufweist. In dieser Ausführungsform sind die ersten Passflächen bevorzugt als gegenüber einer Referenzinnenfläche des Stators erhabene Anformungen ausgebildet. Weiterhin bevorzugt sind die mehreren ersten Passflächen dieser Ausführungsform konzentrisch um die Achse angeordnet.

Da der Lagersitz direkt am Stator angeordnet und in die Umspritzung eingearbeitet ist, ist die Abweichung des Lagersitzes von der Konzentrizität durch die Herstellungsgenauigkeit der ersten Passfläche beziehungsweise der ersten Passflächen bestimmt. Die Toleranzkette ist dadurch minimiert und der Lagersitz sehr genau herstellbar.

Gemäß der Erfindung ist zudem ein Festlager am Stator angeordnet, wobei das Festlager in die Umspritzung eingespritzt ist.

Das Festlager, und die erste Passfläche oder die ersten Passflächen sind bevorzugt konzentrisch um dieselbe Achse angeordnet. Dabei ist auch die Konzentrizität des Festlagers durch die Herstellungsgenauigkeit der Einspritzung des Festlagers bestimmt und die Toleranzkette minimiert. Der Stator dieser Ausführungsform weist daher sowohl in Bezug auf sein Fest-lager als auch in Bezug auf sein Loslager eine sehr gute Konzentrizität auf. Eine elektrische Maschine mit dem Stator dieser Ausführungsform ist daher im Betrieb sehr leise.

In einer besonders bevorzugten Ausführungsform ist der Stator segmentiert. In dieser Ausführungsform bewirkt die Umspritzung zudem, dass die Segmente des Stators zueinander positioniert und aneinander befestigt sind. Zudem ist eine in diesen beiden Lagern gelagerte Welle sehr konzentrisch im Stator anordbar und ein Luftspalt zwischen Rotor und Stator sehr gleichmäßig ausgebildet.

Es ist besonders bevorzugt, dass die Umspritzung die Außenfläche des Stators bildet. In dieser Ausführungsform umgibt die Umspritzung die elektrischen Komponenten des Stators zumindest an der achsabgewandten Seite. Weiterhin bevorzugt umgibt die Umspritzung den Stator zudem an sich quer zur Achse erstreckenden, sich gegenüberliegenden Stirnseiten. Als elektrische Komponenten werden hier Spulenwicklungen des Stators mit gegebenenfalls vorgesehenen Spulenkernen und/oder Dauermagnete bezeichnet, die zur Erzeugung des elektrischen Feldes vorgesehen sind. Da die Umspritzung die Außenfläche des Stators bildet, dient sie in dieser Ausführungsform gleichzeitig als Korrosions-, Staub- und Feuchtigkeitsschutz.

In einer weiteren bevorzugten Ausführungsform sind das Loslager und das Festlager als Kugellager ausgebildet. Die Erfindung ist aber auch auf Gleitlager anwendbar.

Es ist bevorzugt, dass die Umspritzung aus einem Kunststoff gefertigt ist, insbesondere aus einem Duroplasten, aus einem Faser- Matrix- Halbzeug mit duroplastischer Matrix wie beispielsweise BMC (Bulk Moulding Compound), oder einem Thermoplasten wie beispielsweise Polybutylenterephthalat (PBT), Polyethylenterephthalat (PET) oder einem Polyphthalamid (PPA). Diese Werkstoffe ermöglichen eine mit einem bearbeiteten Metall vergleichbare Fertigungsgenauigkeit. In einer besonders bevorzugten Ausführungsform ist die Umspritzung aus Polybutylenterephthalat hergestellt, da sie in dieser Ausführungsform eine hohe Festigkeit und Steifigkeit sowie sehr gute Reibungs- und Verschleißeigenschaften aufweist.

In einer bevorzugten Ausführungsform weist die Umspritzung an ihrer achszugewandten Seite zudem eine zweite Passfläche zum Anordnen eines Gehäusedeckels auf. Dadurch ist auch diese zweite Passfläche sehr genau herstellbar, und der Gehäusedeckel sehr genau zentrisch am Stator anordbar

Die Aufgabe wird weiterhin gelöst mit einer elektrischen Maschine mit einem solchen Stator. Aufgrund der sehr guten Konzentrizität des am Stator ausgeführten Lagersitzes für das Loslager und gegebenenfalls zudem des im Stator eingespritzten Festlagers ist die elektrische Maschine im Betrieb sehr leise.

In einer bevorzugten Ausführungsform ist die elektrische Maschine ein Gleichstrommotor. Die Erfindung ist aber nicht auf Gleichstrommotoren beschränkt, sondern eignet sich auch für andere elektrische Maschinen wie beispielsweise Synchronmaschinen.

Besonders bevorzugt wird der Gleichstrommotor als Verstellantrieb in einem Kraftfahrzeug genutzt. Er ist aber auch für andere Vorrichtungen verwendbar, wie beispielsweise als Antrieb für eine Handwerkzeugmaschine.

Es ist besonders bevorzugt, dass die Umspritzung des Stators das Gehäuse der elektrischen Maschine bildet. In dieser Ausführungsform wird auf ein zusätzliches Gehäuse, das neben Kosten und Montageaufwand auch zusätzliche Geräusche und Vibrationen verursacht, verzichtet.

Die elektrische Maschine umfasst bevorzugt einen Rotor, der zwischen dem Festlager und dem Loslager drehfest an der Welle angeordnet ist. Die Welle ist bevorzugt in dem Festlager und dem Loslager gelagert, so dass sie beidseitig gelagert ist. Sie ist vorzugsweise als Vollwelle, als Vollhohlwelle oder als Hohlwelle ausgebildet.

In einer bevorzugten Ausführungsform umfasst die elektrische Maschine einen Gehäusedeckel, an dem ein Vorspannmittel angeordnet ist. Es ist bevorzugt, dass das Vorspannmittel gegen eine Rückstellkraft am Loslager, insbesondere am Lageraußenring, anliegt. Das Vorspannmittel verspannt das Loslager vorzugsweise in axialer Richtung. Dadurch wird das Loslager, insbesondere der Lageraußenring, im Betrieb der elektrischen Maschine weniger in axialer Richtung hin und her verschoben, so dass das Loslager weniger Geräusche verursacht und seine Lebensdauer verbessert ist.

Besonders bevorzugt ist das Vorspannmittel als ein elastischer Spannring ausgebildet, der sich vorzugsweise konzentrisch um die Achse erstreckt. In einer bevorzugten Ausführungsform weist der Spannring überall denselben Querschnitt auf und liegt am Loslager an. In dieser Ausführungsform ist es bevorzugt aus einem Elastomer oder Gummi gebildet und dichtet einen Innenraum des Stators gegen Staub- und Feuchtigkeit ab. In einer ebenfalls bevorzugten Ausführungsform ist der Spannring aus einem Metall oder einer Metalllegierung hergestellt und in axialer Richtung wellenförmig ausgebildet. Dadurch liegt er in voneinander beabstandeten Anlageflächen am Loslager an. In dieser Ausführungsform ist er sehr kostengünstig herstellbar.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt in **Fig. 1 (a)** eine elektrische Maschine mit segmentiertem Stator gemäß dem Stand der Technik, und in Fig. **1 (b)** beispielhaft einen Ausschnitt aus einem Kern eines segmentierten Stators,
- **Fig. 2**: zeigt in **Fig. 2 (a)** eine elektrische Maschine mit einem erfindungsgemäßen Stator, und in **Fig. 2 (b)** die elektrische Maschine der **Fig. 2 (a)** mit einem Gehäuse,
- **Fig. 3**: zeigt eine weitere Ausführungsform einer elektrischen Maschine mit erfindungsgemäßen Stator, wobei die **Fig. 3 (a)** und **Fig. 3 (b)** den Stator mit einem Gehäusedeckel und verschiedenen Vorspannmitteln zeigen, und wobei die **Fig. 3 (c)** einen Ausschnitt aus dem Gehäusedeckel mit dem Vorspannmittel der **Fig. 3 (b)****,** und die **Fig. 3 (d)** den Gehäusedeckel mit dem Vorspannmittel der **Fig. 3 (a)** zeigt,
- **Fig. 4**: zeigt eine weitere Ausführungsform eines erfindungsgemäßen Stators, wobei die **Fig. 4 (a)** den Stator mit eingespritztem Festlager in einer perspektivischen Ansicht, die **Fig. 4(b)** eine Seitenansicht in den Innenraum dieses Stators, und die **Fig. 4(c)** einen Ausschnitt einer elektrischen Maschine mit diesem Stator zeigen, und
- **Fig. 5**: zeigt in den **Fig. 5(a)** und **5(b)** ein Schnittbild einer weiteren Ausführungsform einer elektrischen Maschine mit erfindungsgemäßem Stator in verschiedenen perspektivischen Ansichten.

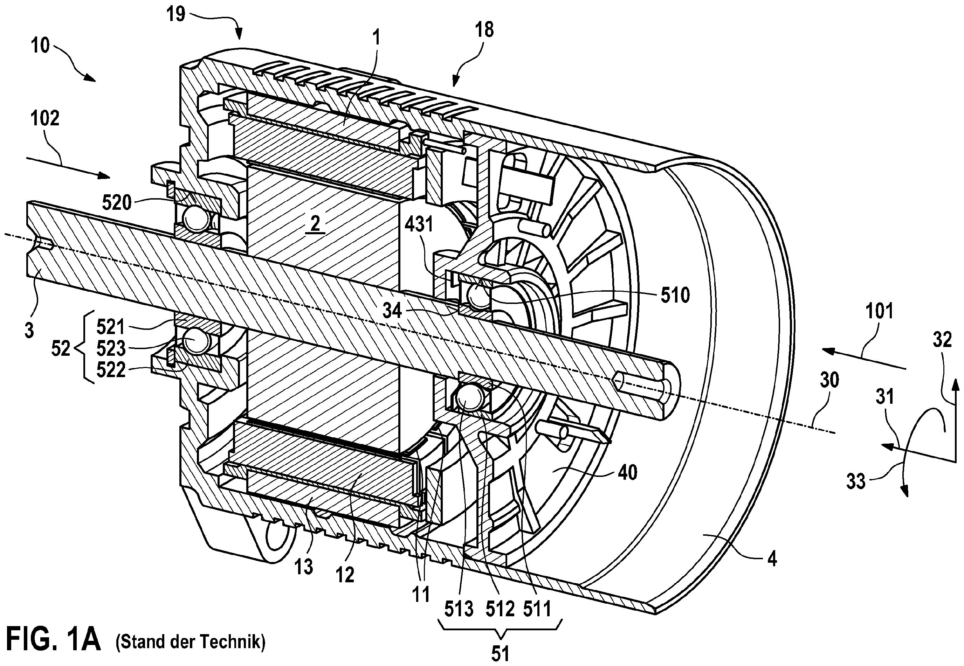

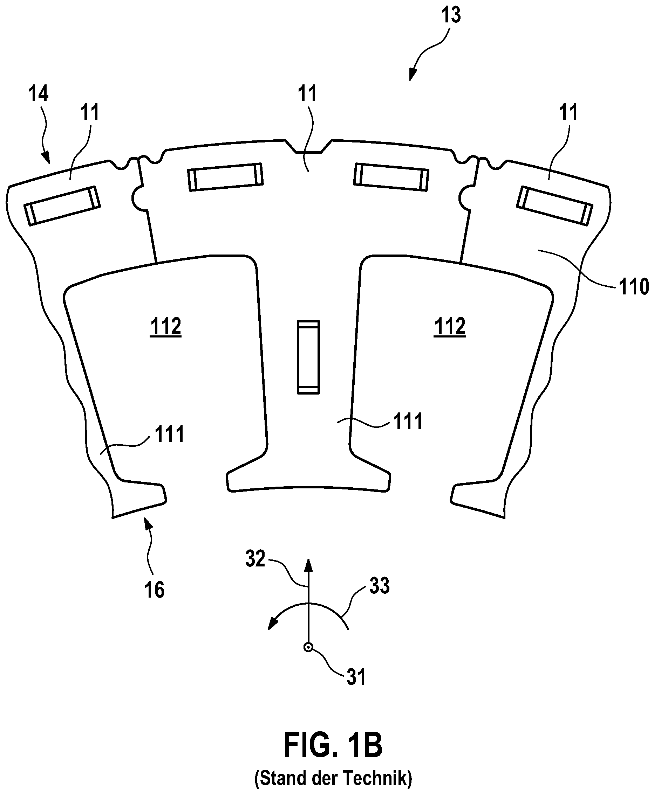

**Fig. 1** zeigt in **(a)** eine elektrische Maschine 10 gemäß dem Stand der Technik. Die elektrische Maschine 10 weist als statische Komponente einen Stator 1 auf, und als rotierende Komponente einen Rotor 2. Der Rotor 2 ist drehfest an eine Welle 3 angeordnet, die sich entlang einer Achse 30 erstreckt. Dabei sind Welle 3, Rotor 2 und Stator 1 konzentrisch um die Achse 30 angeordnet.

Zur Lagerung der Welle 3 und des Rotors 2 sind beidseitig des Rotors 2 ein Festlager 52 und ein Loslager 51 vorgesehen. Die beiden Lager 51, 52 sind als Kugellager ausgebildet und weisen jeweils einen Lagerinnenring 511, 521 und einen Lageraußenring 512, 522 auf, zwischen denen Kugeln 513, 523 angeordnet sind. Das Festlager 52 ist in einem Gehäuse 4, hier einem Aluminium- Gehäuse, angeordnet, das den Stator 1 umgibt und als Staub-, Feuchtigkeits- und Korrosionsschutz sowie zur Wärmeableitung vom Stator 1 zur Umgebung der elektrischen Maschine 10 und zum Wärmeausgleich zwischen den gegenüberliegenden Enden 18, 19 des Stators 1 dient. Das Loslager 51 ist in einem Lagerdeckel 40 angeordnet, der bevorzugt ebenfalls aus Aluminium gefertigt ist.

Die Lager 51, 52 dieser elektrischen Maschine10 sind als Kugellager ausgebildet. Die Erfindung ist aber auch auf elektrische Maschinen 10 anwendbar, deren Welle 3 in Gleitlagern (nicht gezeigt) gelagert ist.

Ein Festlager 52 im Sinne dieser Erfindung ist ein Lager, das sowohl in eine axiale Richtung 31 als auch gegen die axiale Richtung 31 Kräfte aufnimmt. Es ist vorzugsweise zum Befestigen der Welle 3 vorgesehen.

Ein Loslager 51 im Sinne dieser Erfindung ist ein Lager, das zumindest einen in axialer Richtung 31 verschieblichen Lagerinnenring 511 oder Lageraußenring 512 umfasst.

Der Stator 1 ist segmentiert und weist daher Segmente 11 auf (s. **Fig. 1(b)**), mit Spulen 12, die um Spulenkerne 13 gewickelt sind. Die Spulen 12 sind schematisch dargestellt. Die Spulenkerne 13 sind bevorzugt als Eisenkerne ausgebildet. Die Segmente 11 sind nicht miteinander verbunden, sondern hier am Gehäuse 4 festgelegt..

Die Konzentrizität dieser elektrischen Maschine 10 ist nicht nur von der Konzentrizität des Gehäuses 4, sondern auch von der Konzentrizität der Statorsegmente 11, des Lagersitzes 520 für das Festlager 52, des Gehäusedeckels 41 und des Lagersitzes 510 für das Loslager 51 bestimmt. Neben der Welle 3 und dem Rotor 2 können all diese Komponenten im Betrieb der elektrischen Maschine 10 vibrieren, was zu erheblichen Geräuschen führen kann.

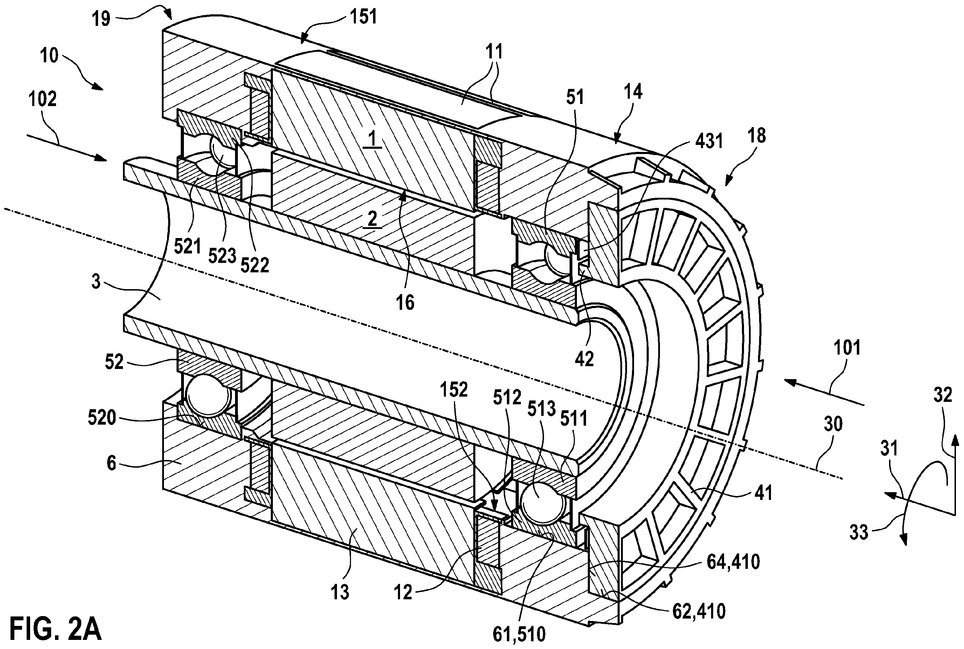

Die **Fig. 1 (b)** zeigt beispielhaft einen Ausschnitt aus einem Kern 13 eines segmentierten Stators 1. Die Statorsegmente 11 sind im Querschnitt etwa T- förmig ausgebildet und erstrecken sich in die axiale Richtung 31. Sie weisen an der achszugewandten Seite 16 des Stators jeweils einen Pol 111 auf, der sich in die radiale Richtung 32 erstreckt. An der achsabgewandten 14 Seite weisen sie jeweils ein sich etwa quer zum Pol 111 erstreckendes Jochsegment 110 auf. In Umfangsrichtung 33 sind die Statorsegmente 11 aneinander gereiht, so dass die Jochsegmente 110 aneinander anliegen, um einen möglichst guten Wirkungsgrad der elektrischen Maschine 10 zu erhalten. Zwischen den Polen 111 ist jeweils ein Freiraum 112 vorgesehen, der zur Aufnahme der um die Pole 111 gewickelten Statorwicklungen 12 (s. **Fig. 1 (a)**) vorgesehen ist.
Die elektrische Maschine 10 der **Fig. 2 (a)** weist einen erfindungsgemäßen Stator 1 auf, mit einer Umspritzung 6. Der Stator 1 weist eine Außenfläche 151 auf, die an einer achsabgewandten Seite 14 des Stators 1 zumindest teilweise durch die Umspritzung des Stators 1 gebildet ist.

Der Stator 1 ist segmentiert und weist daher in tangentialer Richtung 33 nebeneinander angeordnete Statorsegmente 11 auf, deren Jochsegmente 110 aneinander anliegen. Um die Pole 111 der Statorsegmente 11 sind die Statorwicklungen gewickelt. Ein zwischen den Statorwicklungen 12 verbleibender Freiraum ist mit der Umspritzung 6 ausgefüllt. Die Umspritzung 6 umgibt den Stator 1 so, dass die Statorsegmente 11 zueinander positioniert und miteinander verbunden sind.

In die Umspritzung 6 ist an einem zweiten Ende 19 des Stators 1 an einer achszugewandten Seite 16 ein Festlager 52 eingespritzt, so dass das Festlager 52 spielfrei in seinem Lagersitz 520 angeordnet ist. Zudem weist die Umspritzung 6 an einem dem zweiten Ende19 gegenüberliegenden ersten Ende 18, an ihrer achszugewandten Seite 16 einen Lagersitz 510 für ein Loslager 51 auf.

Sowohl das Festlager 52 als auch das Loslager 51 sind hier als Kugellager ausgebildet.

Der Lagersitz 510 für das Loslager 51 umfasst eine sich konzentrisch um die Achse 30 erstreckende erste Passfläche 61, sowie hier zudem eine Kante 63. Bei dieser Kante 63 handelt es sich um eine Fertigungskante, die für die Lagerung des Loslagers 51 nicht erforderlich ist. Der Lagerinnenring 511 des Loslagers 51 ist hier drehfest an der Welle 3 angeordnet. Der Lageraußenring 512 des Loslagers 51 ist hingegen in axialer Richtung 32 verschieblich vorgesehen und wird durch den Lagerinnenring 511 und die Kugeln 513 gehalten.

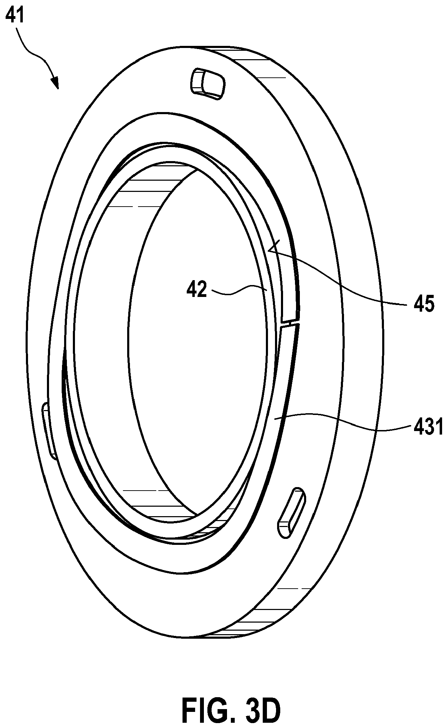

Um das Loslager 51 in die axiale Richtung 31 zu verspannen, ist ein Gehäusedeckel 41 vorgesehen, der sich konzentrisch um die Achse 30 erstreckt. Dafür weist die Umspritzung 6 eine zweite Passfläche 62 sowie einen zweiten Anschlag 64 auf, die als Gehäusedeckelsitz 410 dienen. Am Gehäusedeckel 41 ist ein Gehäusedeckelsteg 42 vorgesehen, der sich konzentrisch um die Achse 30 erstreckt. Der Gehäusedeckelsteg 42 positioniert ein Spannmittel 431, das hier als sich konzentrisch um die Achse 30 erstreckender Spannring ausgebildet ist, in radialer Richtung 32. Im Folgenden werden die Begriffe Spannmittel 431 und Spannring synonym verwendet. Der Spannring 431 der hier gezeigten Ausführungsform ist in axialer Richtung 31 wellenförmig gebogen und bevorzugt aus einem Federstahl gebildet. Die **Fig. 3 (d)** zeigt den Gehäusedeckel 41 mit diesem Spannring 431.

Die elektrische Maschine 10 weist eine Welle 3 auf, die sich in Richtung der Achse 30 erstreckt. An der Welle 3 ist ein Rotor 2 drehfest angeordnet, so dass sich der Rotor 2 bei einem Drehen der Welle 3 mitdreht. Die Welle 3 ist in dem Festlager 52 und dem Loslager 51 gelagert, so dass der Rotor 2 zwischen dem Festlager 52 und dem Loslager 51 angeordnet und beidseitig gelagert ist.

Bei diesem Stator 1 bestimmt die Herstellungsgenauigkeit der Umspritzung 6 die Konzentrizität der elektrischen Maschine 10, da das Festlager 51 spielfrei in die Umspritzung 6 eingespritzt, und der Lagersitz 510 für das Loslager 51 an der Umspritzung 6 angeordnet ist. Fertigungstoleranzen des Gehäuses 4 und eines Lagerdeckels 40, den diese elektrische Maschine 10 gar nicht aufweist, beeinflussen die Konzentrizität dieses Stators 1 beziehungsweise dieser elektrischen Maschine 10 nicht.

Da eine solche Umspritzung 6 sehr genau herstellbar ist, weist der Stator 1 beziehungsweise die elektrische Maschine 10 mit diesem Stator 1 eine sehr gute Konzentrizität auf. Vibrationen und Geräusche, die im Betrieb der elektrischen Maschine 10 durch Abweichungen von der Konzentrizität auftreten, sind daher sehr gering. Die elektrische Maschine 10 ist daher im Betrieb sehr leise.

Die Wicklungen 12 des Stators 1 werden bevorzugt vor dem Umspritzen des Stators 1 verschaltet. Beim Umspritzen der Statorsegmente 11 werden diese in einem einzigen Herstellungsschritt miteinander verbunden, das Festlager 52 konzentrisch positioniert und eingespritzt, und der Lagersitz 510 für das Loslager 51 sowie gegebenenfalls für einen Gehäusedeckel 41 gebildet. Die Welle 3 mit dem Rotor 2 sowie das Loslager 51 werden nach dem Umspritzen in den Innenraum 100 des Stators 1 gefügt. Anschließend wird der Gehäusedeckel 41 an der Umspritzung 6 angeordnet.

Insgesamt ist die elektrische Maschine 10 mit weniger Bauteilen herstellbar, als eine herkömmliche elektrische Maschine 10. Der erfindungsgemäße Stator 1 beziehungsweise die elektrische Maschine 10 mit diesem Stator 1 sind zudem kürzer baubar. Und sie sind mit weniger Herstellungsschritten genauer herstellbar.

Die Welle 3 des Stators 1 der **Fig. 2 (a)** ist als Hohlwelle ausgebildet, so dass sie ein verhältnismäßig kleines Gewicht aufweist.

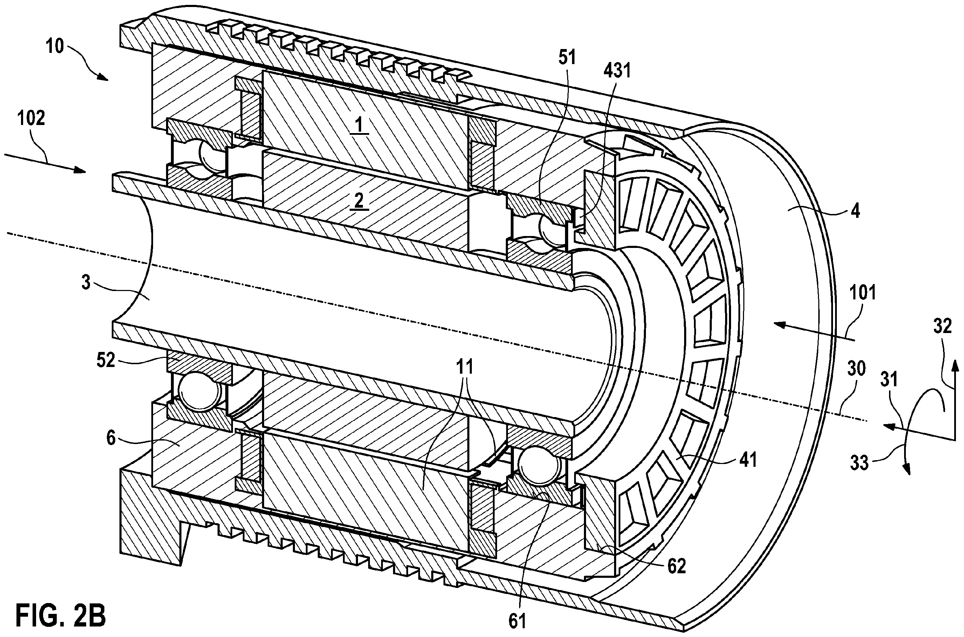

Die **Fig. 2 (b)** zeigt den Stator 1 der **Fig. 2 (a)** in einem Gehäuse 4, das ihn konzentrisch umgibt und gegen das Eindringen von Staub und Feuchtigkeit sowie gegen Korrosion schützt. Das Gehäuse 4 ist bevorzugt aus Aluminium gebildet, so dass es einerseits leicht ist und andererseits eine gute Wärmeableitung ermöglicht.

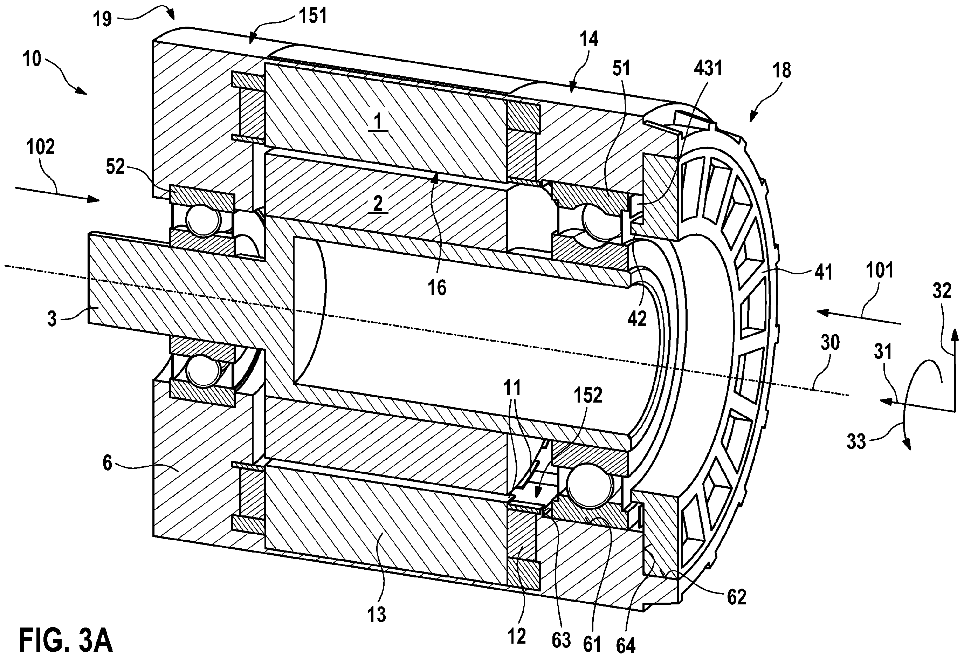

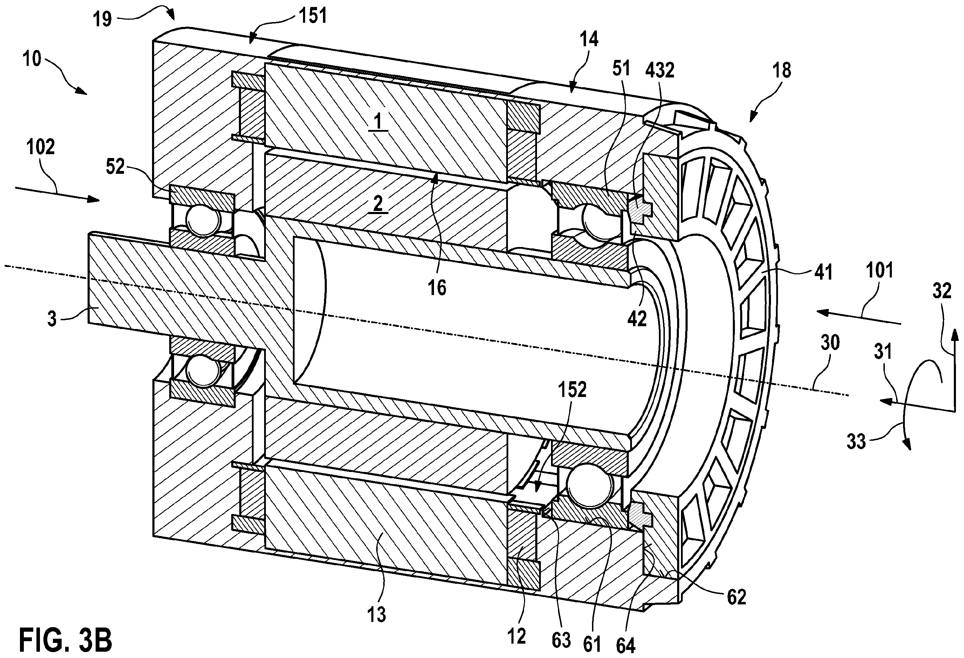

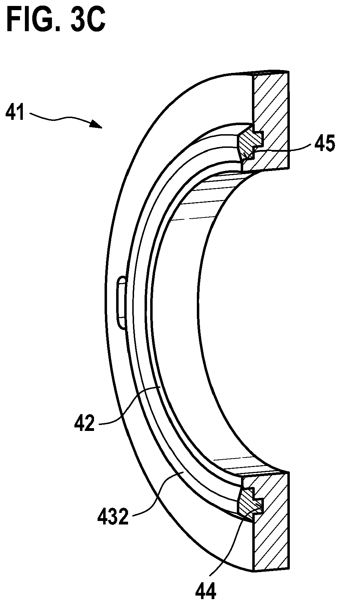

Die elektrische Maschine 10 der **Fig. 3** weist eine Voll- Hohlwelle 3 auf. Im Bereich des Festlagers 52 ist sie als Vollwelle ausgebildet, mit einem kleinen Durchmesser, und im Bereich des Loslagers 51 und des Rotors 2 als Hohlwelle mit einem im Vergleich dazu großen Durchmesser. Dadurch kann ein herkömmliches Lager als Festlager 52 verwendet werden. Zudem ist ein Rotor 2 mit großem Innendurchmesser verwendbar, wobei das Gewicht der elektrischen Maschine 10 im Vergleich zu einer ansonsten baugleichen elektrischen Maschine 10, die im Bereich des Rotors 2 eine als Vollwelle ausgebildete Welle 3 aufweist, klein ist. Eine Hohlwelle hat im Vergleich zu einer Vollwelle zudem den Vorteil einen größeren Steifigkeit, da sie eine geringere Durchbiegung aufweist.

Auch bei dieser elektrischen Maschine 10 ist das Festlager 52 in die Umspritzung 6 des Stators 1 eingespritzt, und der Lagersitz 510 des Loslagers 51, insbesondere seine erste Passfläche 61, ebenfalls in der Umspritzung 6 vorgesehen. Zudem weist auch dieser Lagersitz 510 eine sich konzentrisch um die Achse 30 erstreckende erste Passfläche 61 für das Loslager 51 auf.

Weiterhin weist auch dieser Stator 1 eine zweite Passfläche 62 und einen zweiten Anschlag 64 für den Gehäusedeckel 41 auf, der die Bewegung des Loslagers 51 gegen die axiale Richtung 31 begrenzt.

Am Gehäusedeckel 41 ist der Spannring 431 angeordnet. Auch dieses Loslager 51 wird daher vorgespannt, um Temperaturdifferenzen und Fertigungstoleranzen auszugleichen.

Die **Fig. 3 (b)** zeigt eine elektrische Maschine 10 mit einem solchen Gehäusedeckel 41 und einem Vorspannmittel 432 einer weiteren Ausführungsform.

In der **Fig. 3 (c)** ist ein Ausschnitt aus dem Gehäusedeckel 41 mit dem Spannring 431 der elektrischen Maschine 10 der **Fig. 3 (a)** gezeigt. In der **Fig. 3 (d)** ist ein Gehäusedeckel 41 mit dem Spannring 432 der elektrischen Maschine 10 der **Fig. 3 (b)** gezeigt.

Der Spannring 432 der **Fig. 3 (c)** ist bevorzugt elastisch ausgebildet. Vorzugsweise ist es aus Gummi oder einem Elastomer hergestellt. Dieser Spannring 432 ist vorzugsweise durch eine Presspassung in einer Nut 44 im Gehäusedeckel 41 angeordnet. In Umfangsrichtung 33 weist er überall etwa denselben Querschnitt auf. Dabei positioniert der Gehäusedeckelsteg 42 den Spannring 43 in radialer Richtung 32, so dass dieser an einer Innenseite 45 des Gehäusedeckelsteges 42 anliegt.

Der Spannring 431 der **Fig. 3 (d)** ist lose am Gehäusedeckel 41 angeordnet. Auch bei dieser Ausführungsform dient der Gehäusedeckelsteg 42 zur radialen Positionierung des Spannrings 431.

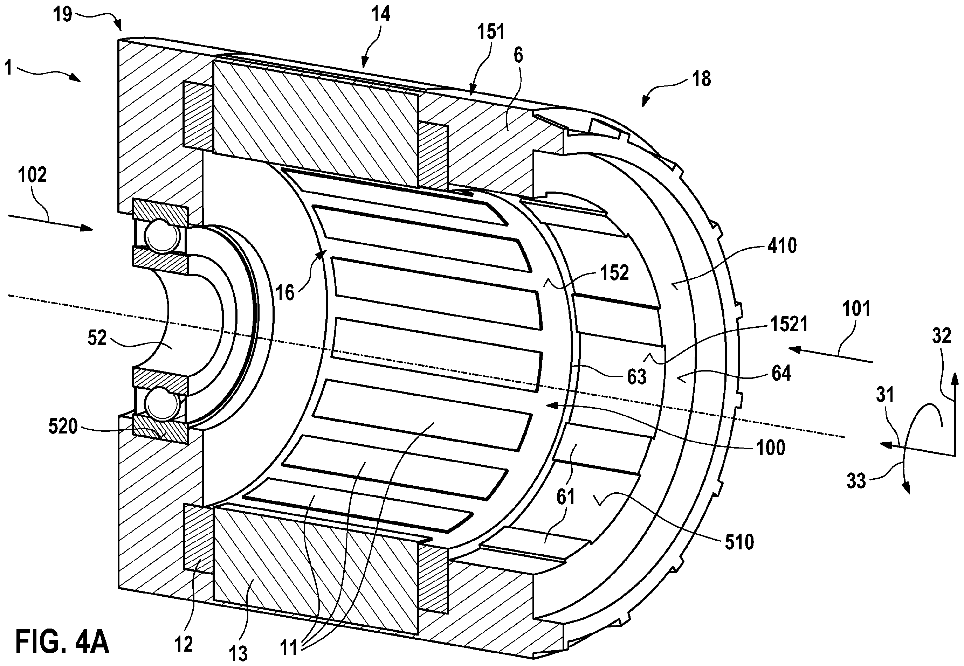

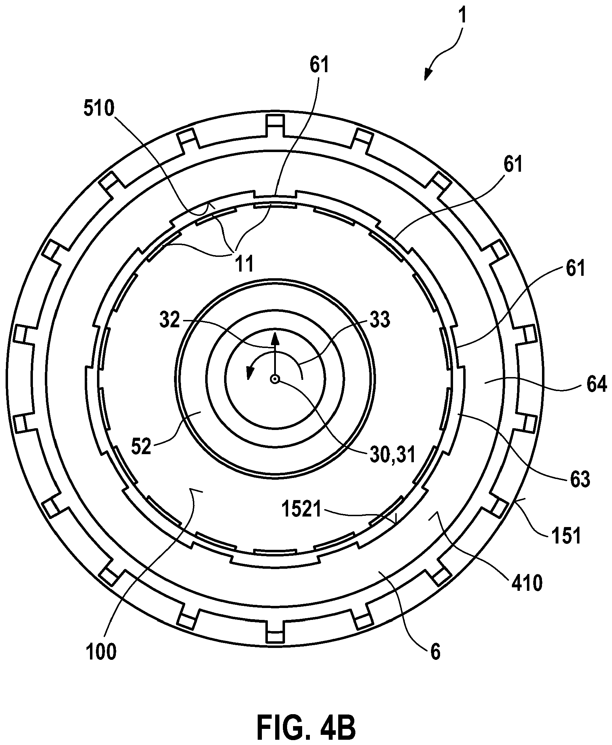

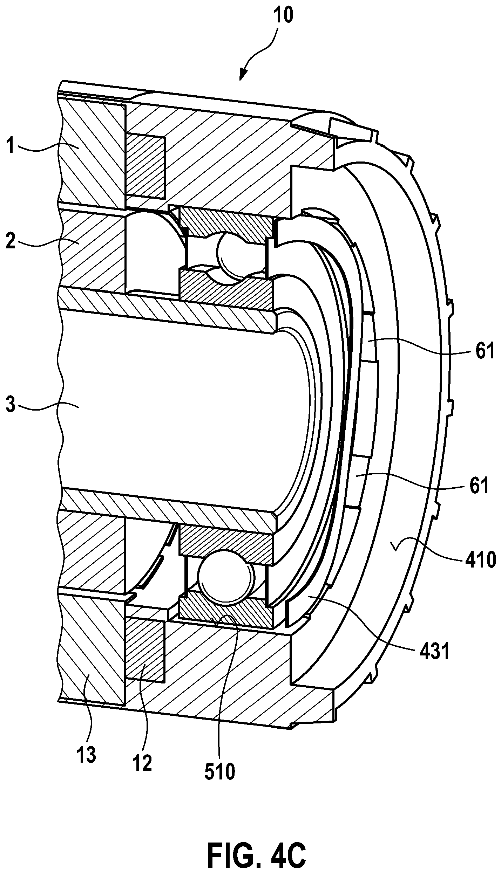

**Fig. 4** zeigt eine weitere Ausführungsform eines erfindungsgemäßen Stators 1. Da hier weder die Welle 3 noch der Rotor 2 noch das Loslager 51 dargestellt sind, zeigt die **Fig. 4** vor allem den Innenraum 100 des Stators 1 und seine Innenfläche 152.

Im Gegensatz zu den bisher gezeigten Statoren weist dieser Stator einen Loslagersitz 510 mit einer Vielzahl gleichmäßig in Umfangsrichtung 33 verteilter erster Passflächen 61 auf. Gegenüber einer im Lagersitz 510 für das Loslager 51 vorgesehenen Referenzinnenfläche 1521 sind die ersten Passflächen 61 erhabene Anformungen. Auch in dieser Ausführungsform erstrecken sich die ersten Passflächen 61 konzentrisch um die Achse 30.

Sichtbar sind zudem die zweite Passfläche 62 sowie der zweite Anschlag 64 für die Lagerung des Gehäusedeckels 41.

**Fig. 4(c)** zeigt einen Ausschnitt aus einer elektrischen Maschine 10 mit dem Stator 1 der **Fig. 4 (a)** und **(b)** im Bereich des Loslagers 51. Der Gehäusedeckel 41 ist nicht gezeigt. Dadurch ist der Vorspannring 431, hier in der Ausführungsform der **Fig. 3 (d)****,** sichtbar.

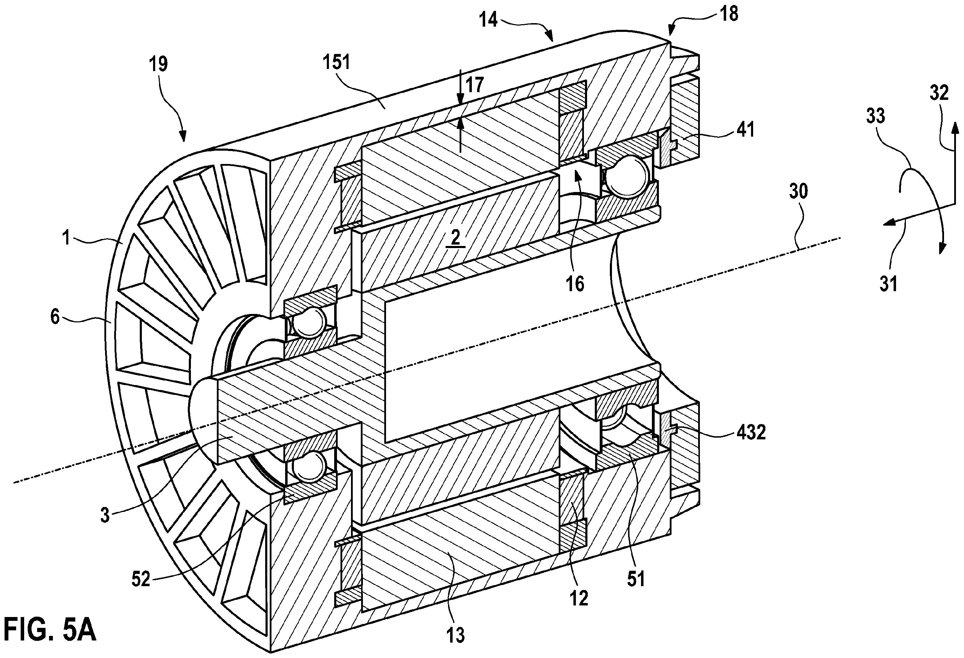

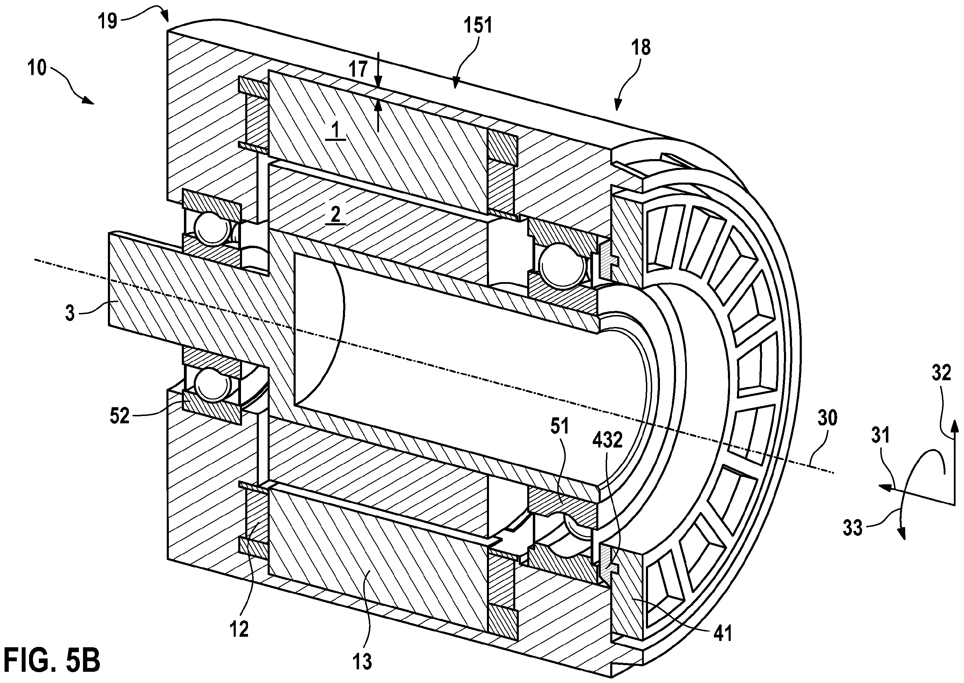

Im Gegensatz zu den Statoren 1 der elektrischen Maschinen 10 der **Fig. 2** und 3 bildet die Umspritzung 6 bei dem Stator 1 der **Fig. 5 (a)** und **(b)** die Außenfläche 151 des Stators 1. Sie ist nicht nur an den sich gegenüberliegenden, quer zur Achse 30 erstreckenden Stirnseiten 101, 102 des Stators 1 vorgesehen. Sondern die Umspritzung 6 umgibt den Stator 1 auch an der achsabgewandten Seite 14 vollständig. Im Bereich der Statorwicklungen 12 weist sie bevorzugt eine Wanddicke 17 von etwa 1 - 10 mm, vorzugsweise 3 - 6 mm auf.

Bei diesem Stator 1 ersetzt die Umspritzung 6 daher ein Gehäuse 4 (s. **Fig. 2(b)**), da sie nicht nur zum Verbinden der Statorsegmente 11 miteinander und als Lagersitz 520, 510 für das Festlager 52 und das Loslager 51 dient, sondern gleichzeitig auch als Staub-, Feuchtigkeits- und Korrosionsschutz.

Zudem sind bei diesem Stator 1 mit der Umspritzung 6 Befestigungsmittel (nicht gezeigt) ausbildbar, mit denen die elektrische Maschine 10 ihrer Einbausituation entsprechend an eine Vorrichtung wie beispielsweise einen Verstellantrieb (nicht gezeigt) oder in eine Vorrichtung wie beispielsweise eine Handwerkzeugmaschine (nicht gezeigt) einbaubar und befestigbar ist.

## Patentansprüche

1. Stator (1) für eine elektrische Maschine (10), der sich konzentrisch um eine Achse (30) erstreckt und eine Umspritzung (6) aufweist, die an einer achsabgewandten Seite (14) des Stators (1) zumindest teilweise eine Außenfläche (151) des Stators (1) bildet, wobei die Umspritzung (6) an einer achszugewandten Seite (16) des Stators (1) einen Lagersitz (510) für ein Loslager (51) aufweist,
**dadurch gekennzeichnet, dass**
zudem ein Festlager (52) in die Umspritzung (6) eingespritzt ist.

2. Stator (1) nach Anspruch 1, **dadurch gekennzeichnet, dass** der Lagersitz (510) eine erste Passfläche (61) umfasst, die sich konzentrisch um die Achse (30) erstreckt.

3. Stator (1) nach Anspruch 1, **dadurch gekennzeichnet, dass** der Lagersitz (510) mehrere erste Passflächen (61) umfasst, die in einer Umfangsrichtung (33) gleichmäßig verteilt angeordnet sind.

4. Stator (1) nach einem der vorherigen Ansprüche, **dadurch gekennzeichnet, dass** er segmentiert ist.

5. Stator (1) nach einem der vorherigen Ansprüche, **dadurch gekennzeichnet, dass** die Umspritzung (6) die Außenfläche (151) des Stators (1) bildet.

6. Stator (1) nach Anspruch 5,
**dadurch gekennzeichnet, dass** das Festlager (52), und die erste Passfläche (61) oder die ersten Passflächen (61) konzentrisch um dieselbe Achse (30) angeordnet sind.

7. Stator (1) nach einem der vorherigen Ansprüche, **dadurch gekennzeichnet, dass** das Loslager (51) und das Festlager (52) jeweils als Gleitlager oder als Kugellager ausgebildet sind.

8. Stator (1) nach einem der vorherigen Ansprüche, **dadurch gekennzeichnet, dass** die Umspritzung (5) aus einem Kunststoff gefertigt ist, insbesondere aus einem Duroplasten oder Polybutylenterephthalat.

9. Stator (1) nach einem der vorherigen Ansprüche, **dadurch gekennzeichnet, dass** die Umspritzung (6) an einer achszugewandten Seite (16) des Stators (1) eine zweite Passfläche (62) zum Anordnen eines Gehäusedeckels (41) aufweist.

10. Elektrische Maschine (10) mit einem Stator (1) nach einem der vorherigen Ansprüche.

11. Elektrische Maschine (10) nach Anspruch 10, **dadurch gekennzeichnet, dass** sie ein Gleichstrommotor ist.

12. Elektrische Maschine (10) nach einem der Ansprüche 10 - 11, **dadurch gekennzeichnet, dass** die Umspritzung (6) des Stators (1) das Gehäuse (4) der elektrischen Maschine (10) bildet.

13. Elektrische Maschine (10) nach einem der Ansprüche 10 -12, **dadurch gekennzeichnet, dass** sie einen Gehäusedeckel (41) umfasst, an dem ein Vorspannmittel (43), insbesondere ein elastischer Vorspannring, angeordnet ist.

14. Verstellantrieb mit einer elektrischen Maschine nach einem der Ansprüche 10 - 13.

## Claims

1. Stator (1) for an electrical machine (10), which stator extends concentrically about an axis (30) and has an encapsulation (6) which at least partially forms an outer surface (151) of the stator (1) on a side (14) of the stator (1) that is averted from the axis, wherein the encapsulation (6) has a bearing seat (510) for a floating bearing (51) on a side (16) of the stator (1) that faces the axis,
**characterized in that**
a fixed bearing (52) is additionally injection-moulded into the encapsulation (6).

2. Stator (1) according to Claim 1, **characterized in that** the bearing seat (510) comprises a first fitting surface (61) which extends concentrically about the axis (30).

3. Stator (1) according to Claim 1, **characterized in that** the bearing seat (510) comprises a plurality of first fitting surfaces (61) which are arranged in a uniformly distributed manner in a circumferential direction (33).

4. Stator (1) according to one of the preceding claims, **characterized in that** it is segmented.

5. Stator (1) according to one of the preceding claims, **characterized in that** the encapsulation (6) forms the outer surface (151) of the stator (1).

6. Stator (1) according to Claim 5, **characterized in that** the fixed bearing (52) and the first fitting surface (61) or the first fitting surfaces (61) are arranged concentrically about the same axis (30).

7. Stator (1) according to one of the preceding claims, **characterized in that** the floating bearing (51) and the fixed bearing (52) are each in the form of a sliding bearing or in the form of a ball bearing.

8. Stator (1) according to one of the preceding claims, **characterized in that** the encapsulation (5) is produced from a plastic, in particular from a thermoset or polybutylene terephthalate.

9. Stator (1) according to one of the preceding claims, **characterized in that** the encapsulation (6) has a second fitting surface (62) for the arrangement of a housing cover (41) on a side (16) of the stator (1) that faces the axis.

10. Electrical machine (10) comprising a stator (1) according to one of the preceding claims.

11. Electrical machine (10) according to Claim 10, **characterized in that** it is a DC motor.

12. Electrical machine (10) according to either of Claims 10 and 11, **characterized in that** the encapsulation (6) of the stator (1) forms the housing (4) of the electrical machine (10).

13. Electrical machine (10) according to one of Claims 10-12, **characterized in that** it comprises a housing cover (41) on which a pretensioning means (43), in particular an elastic pretensioning ring, is arranged.

14. Adjusting drive comprising an electrical machine according to one of Claims 10-13.

## Revendications

1. Stator (1) pour une machine électrique (10), lequel s'étend de manière concentrique autour d'un axe (30) et possède un surmoulage (6) qui forme au moins partiellement une surface extérieure (151) du stator (1) sur un côté (14) du stator (1) à l'opposé de l'axe, le surmoulage (6) possédant un siège de palier (510) pour un palier libre (51) sur un côté (16) du stator (1) faisant face à l'axe,
**caractérisé en ce que**
un palier fixe (52) est en outre injecté dans le surmoulage (6).

2. Stator (1) selon la revendication 1,
**caractérisé en ce que** le siège de palier (510) comprend une première surface d'ajustement (61) qui s'étend de manière concentrique autour de l'axe (30).

3. Stator (1) selon la revendication 1, **caractérisé en ce que** le siège de palier (510) comprend plusieurs premières surfaces d'ajustement (61) qui sont distribuées régulièrement dans une direction périphérique (33).

4. Stator (1) selon l'une des revendications précédentes, **caractérisé en ce qu'**il est segmenté.

5. Stator (1) selon l'une des revendications précédentes, **caractérisé en ce que** le surmoulage (6) forme la surface extérieure (151) du stator (1).

6. Stator (1) selon la revendication 5, **caractérisé en ce que** le palier fixe (52) et la première surface d'ajustement (61) ou les premières surfaces d'ajustement (61) sont disposés de manière concentrique autour du même axe (30).

7. Stator (1) selon l'une des revendications précédentes, **caractérisé en ce que** le palier libre (51) et le palier fixe (52) sont respectivement réalisés sous la forme d'un palier lisse ou d'un roulement à billes.

8. Stator (1) selon l'une des revendications précédentes, **caractérisé en ce que** le surmoulage (5) est fabriqué en une matière plastique, notamment en une matière plastique thermodurcissable ou du polytéréphtalate d'éthylène.

9. Stator (1) selon l'une des revendications précédentes, **caractérisé en ce que** le surmoulage (6) possède, sur un côté (16) du stator (1) faisant face à l'axe, une deuxième surface d'ajustement (62) servant au montage d'un couvercle de carter (41).

10. Machine électrique (10) équipée d'un stator (1) selon l'une des revendications précédentes.

11. Machine électrique (10) selon la revendication 10, **caractérisée en ce qu'**il s'agit d'un moteur à courant continu.

12. Machine électrique (10) selon l'une des revendications 10 à 11, **caractérisée en ce que** le surmoulage (6) du stator (1) forme le carter (4) de la machine électrique (10).

13. Machine électrique (10) selon l'une des revendications 10 à 12, **caractérisée en ce qu'**elle comprend un couvercle de carter (41) sur lequel est disposé un moyen de précontrainte (43), notamment une bague de précontrainte élastique.

14. Mécanisme de positionnement comprenant une machine électrique selon l'une des revendications 10 à 13.
